# EUROPÄISCHE PATENTSCHRIFT

(11) **EP 1 831 274 B1**
(45) Veröffentlichungstag und Bekanntmachung des Hinweises auf die Patenterteilung: **18.02.2009**
(21) Anmeldenummer: 05815230.7
(22) Anmeldetag: 13.12.2005
(51) Int. Cl.: C08G 18/10, C08G 18/48, C08G 18/50, C08L 75/02, C08K 3/34

(54) **FORMTEILE AUS VERSTÄRKTEN POLYURETHANHARNSTOFF-ELASTOMEREN UND DEREN VERWENDUNG**
SHAPED PARTS MADE OF REINFORCED POLYURETHANE UREA ELASTOMERS AND USE THEREOF
PIECES MOULEES EN ELASTOMERES DE POLYURETHANE-UREE RENFORCES, ET LEUR UTILISATION

(30) Priorität: 24.12.2004 DE 102004062550
(43) Veröffentlichungstag der Anmeldung: 12.09.2007
(73) Patentinhaber: Bayer MaterialScience AG, 51368 Leverkusen (DE)
(72) Erfinder: HAAS, Peter, 42781 Haan (DE); ARNTZ, Hans-Detlef, 53797 Lohmar (DE)
(86) Internationale Anmeldenummer: PCT/EP2005/013367
(87) Internationale Veröffentlichungsnummer: WO 2006/069623

(56) Entgegenhaltungen:
- EP-A- 1 004 606
- DE-A1- 19 934 743
- DATABASE WPI Section Ch, Week 200056 Derwent Publications Ltd., London, GB; Class A25, AN 1996-306639 XP002369361 & JP 03 103002 B2 (SUMITOMO BAYER URETHANE CO) 23. Oktober 2000 (2000-10-23)

## Beschreibung

Die Erfindung betrifft mit Verstärkungsstoffen ausgerüstete Formteile aus Polyurethanharnstoff-Elastomeren mit bestimmten Harnstoff- und Urethananteilen sowie deren Verwendung.

Die Herstellung von Polyurethanharnstoff-Elastomeren durch Umsetzung von NCO-Semiprepolymeren mit Gemischen aus aromatischen Diaminen sowie höhermolekularen Hydroxy- oder Aminogruppen enthaltenden Verbindungen ist bekannt und beispielsweise in EP-A 225 640 beschrieben. Um bestimmte mechanische Eigenschaften bei den daraus hergestellten Formkörpern zu erreichen, müssen den Reaktionskomponenten Verstärkungsstoffe zugesetzt werden, wodurch insbesondere thermomechanische Eigenschaften verbessert und der Biege-Elastizitäts-Modul erheblich angehoben wird. Durch den Einsatz dieser Verstärkungsstoffe ändern sich jedoch auch die Längs- und Querschwindungseigenschaften bei den hergestellten Formkörpern.

Wünschenswert sind daher verstärkte Polyurethanharnstoff Elastomere, die bei der Herstellung von flächigen Formkörpern, wie Kotflügel, Türen oder Heckklappen von Automobilen ein annähernd isotropes Verhalten aufzeigen, d.h. möglichst geringe unterschiedliche Längs- und Querschwindungseigenschaften zeigen.

Darüber hinaus sollen sich die aus den verstärkten Polyurethan-Elastomeren hergestellten Formkörper leicht und mit einem möglichst geringen Zusatz an Trennhilfsmitteln von den Formen trennen lassen, um möglichst hohe Taktzeiten durch ein trennfreundliches System zu gewährleisten.

In der EP-A 1004 606 wurde durch Anheben der Funktionalität der Polyolreaktionenskomponente auf 4 bis 8 und der Funktionalität der Polyolkomponente, die bei der Herstellung der Isocyanat-Prepolymerkomponente eingesetzt wurde, auf 3 bis 8 gute Trenneigenschaften der verstärkten PUR-Harnstoffelastomeren erhalten.

Bei hohen Gehalten an Polyharnstoffsegmenten im Elastomer (bereits bei 85 bis 90 Mol.-% bezogen auf Mol.-% eines NCO-Äquivalents) zeigt das Elastomer starke Versprödung. Solche Formteile zerbrechen leicht bei Biegebeanspruchung.

Aufgabe war es daher, Formteile zur Verfügung zu stellen, die gute thermomechanische Eigenschaften aufweisen, einen hohen Biege-Elastizitäts-Modul haben, geringe Schwindung in Längs- und Querrichtung zeigen, gute Trenneigenschaften und geringe Standzeiten aufweisen.

Diese Aufgabe konnte durch den Zusatz bestimmter Kautschukgele zum Elastomer gelöst werden, wobei das Biegeverhalten des Elastomers gegenüber dem Stand der Technik wesentlich verbessert werden konnte.

Gegenstand der vorliegenden Erfindung sind daher mit Verstärkungsstoffen ausgerüstete Polyurethanharnstoff-Elastomere mit einem Harnstoffanteil von 70 bis 95 Mol-% und einem Urethananteil von 5 bis 30 Mol-%, jeweils bezogen auf Mol-% eines NCO-Äquivalents, erhältlich durch Umsetzung eines Reaktionsgemisches aus einer

A-Komponente aus
A1) aromatischen Diaminen, die zumindest in jeweils einer ortho-Stellung zu den Aminogruppen einen Alkylsubstituenten aufweisen,
A2) mindestens einer aliphatischen Komponente bestehend aus mindestens einem Hydroxyl- und/oder primäre Aminogruppen aufweisenden Polyether- und/ oder Polyesterpolyol mit einem zahlenmittleren Molekulargewicht von 500 bis 18 000 und einer Funktionalität von 3 bis 8,
A3) einem Verstärkungsstoff und
A4) gegebenenfalls Katalysatoren und/oder gegebenenfalls Zusatzstoffen
sowie B-Komponente aus der Reaktion von
B1) einer Polyisocyanatkomponente aus der Gruppe bestehend aus Polyisocyanaten und Polyisocyanatgemischen der Diphenylmethanreihe und verflüssigten Polyisocyanaten der Diphenylmethanreihe mit
B2) mindestens einer Polyolkomponente mit einem zahlenmittleren Molekulargewicht von 500 bis 18 000 und einer Funktionalität von 3 bis 8 aus der Gruppe bestehend aus gegebenenfalls organische Füllstoffe enthaltenden Polyetherpolyolen und gegebenenfalls organische Füllstoffe enthaltenden Polyesterpolyolen,
dadurch gekennzeichnet, dass die Komponente A und/oder Komponente B mit gegenüber Isocyanatgruppen reaktiven Gruppen modifizierte Kautschukgele (C) enthält.

Durch die modifizierten Kautschukgele (C) werden die Zähigkeitseigenschaften der Polyurethanharnstoffelastomere, insbesondere bei denen mit hohem Polyharnstoffgehalt wesentlich verbessert.

Der Anteil der modifizierten Kautschukgele (C) in dem unverstärkten Elastomer beträgt 0,5 bis 25 Gew.-%, bevorzugt 2,5 bis 20 Gew.-%.

Die A-Komponente und die B-Komponente werden in einem solchen Mengenverhältnis umgesetzt, dass die Isocyanatkennzahl des erhaltenen Elastomeren bevorzugt im Bereich von 80 bis 120 liegt und die über die B-Komponente eingebrachte Polyolkomponente B2) 10 bis 90 Mol-% des Urethananteils darstellt.

Als vernetzte Kautschukpartikel, sogenannte Kautschukgele, werden solche eingesetzt, die durch entsprechende Vernetzung folgender Kautschuke erhalten werden:

| | |
|---|---|
| BR: | Polybutadien, |
| ABR: | Butadien/Acrylsäure-C₁-C₄-Alkylestercopolymere, |
| IR: | Polyisopren, |
| SBR: | Styrol-Butadien-Copolymerisate mit Styrolgehalten von 1 bis 60, vorzugsweise 5 bis 50 Gew.-%, |
| X-SBR: | carboxylierte Styrol-Butadien-Copolymerisate, |
| FKM: | Fluorkautschuk, |
| ACM: | Acrylatkautschuk, |
| NBR: | Polybutadien-Acrylnitril-Copolymerisate mit Acrylnitrilgehalten von 5 bis 60, vorzugsweise 10 bis 50 Gew.-%, |
| X-NBR: | carboxylierte Nitrilkautschuke, |
| CR: | Polychloropren, |
| IIR: | Isobutylen/Isopren-Copolymerisate mit Isoprengehalten von 0,5 bis 10 Gew.-%, |
| BIIR: | bromierte Isobutylen/Isopren-Copolymerisate mit Bromgehalten von 0,1 bis 10 Gew.-%, |
| CIIR: | chlorierte Isobutylen/Isopren-Copolymerisate mit Bromgehalten von 0,1 bis 10 Gew.-%, |
| HNBR: | teil- und vollhydrierte Nitrilkautschuke, |
| EPDM: | Ethylen-Propylen-Dien-Copolymerisate, |
| EAM: | Ethylen/Acrylatcopolymere, |
| EVM: | Ethylen/Vinylacetatcopolymere, |
| CO und ECO: | Epichlorhydrinkautschuke. |

Besonders bevorzugt sind insbesondere solche Kautschuke, die durch Hydroxyl-, Carboxyl-, Amino- und/oder Amidgruppen funktionalisiert sind.

Die Einführung funktioneller Gruppen kann direkt bei der Polymerisation durch Copolymerisation mit geeigneten Comonomeren oder nach der Polymerisation durch Polymermodifikation erfolgen. Hierzu eignen sich besonders die hydroxyfünktionellen Ester von Aryl- und Methacrylsäure.

Bevorzugt werden verstärkte Polyurethan-Elastomere mit einem Harnstoffanteil von 75 bis 90 Mol-% und einem Urethananteil von 10 bis 25 Mol-%, bezogen auf Mol-% eines NCO-Äquivalents eingesetzt.

Es ist weiterhin bevorzugt, dass die A-Komponente und die B-Komponente in einem solchen Mengenverhältnis umgesetzt werden, dass die Isocyanatkennzahl des erhaltenen Elastomeren bevorzugt im Bereich von 90 bis 115 liegt und die über die B-Komponente eingebrachte Polyolkomponente B2) 30 bis 85 Mol-% des Urethananteils darstellt.

Als Verstärkungsstoffe werden bevorzugt solche Verstärkungsstoffe eingesetzt, die anorganischer Natur sind und eine Plättchen- und/oder Nadelstruktur aufweisen. Insbesondere handelt es sich dabei um Silikate der II. und III. Hauptgruppe des Periodensystems, wie Calciumsilikate vom Wollastonittyp und Aluminiumsilikate vom Glimmer- oder Kaolintyp. Solche silikatischen Verstärkungsstoffe sind bekannt unter der Bezeichnung Gruppen-, Ring-, Ketten- oder Bandsilikate und z.B. in Hollemann-Wiberg, W. de Gruyter Verlag (1985) 768 bis 778 beschrieben.

Diese Verstärkungsstoffe weisen einen Durchmesser bzw. eine Tafelhöhe oder Dicke von 2 bis 30 µm sowie eine Längenausdehnung von 10 bis 600 µm auf und haben einen Längen-/Durchmesserquotienten der im Bereich 5:1 bis 35:1, bevorzugt 7:1 bis 30:1, liegt. Der Durchmesser kugeliger Anteile liegt bei 5 bis 150, bevorzugt 20 bis 100 µm.

Die genannten Verstärkungsstoffe werden üblicherweise in Mengen von 10 bis 35 Gew.-%, bevorzugt 10 bis 30 Gew.-%, bezogen auf die Gesamtmenge der Komponenten A und B bei dem erfindungsgemäßen Verfahren zugesetzt.

Wie oben beschrieben wird eine sogenannte A-Komponente mit einer sogenannten B-Komponente umgesetzt, wobei bevorzugt die A-Komponente die modifizierten Kautschukgele (C) enthält.

Es handelt sich bei den modifizierten Kautschukgelen um solche Typen, die gegenüber Isocyanaten reaktive Gruppen aufweisen.

Die Herstellung und die Charakterisierung vernetzter Kautschukmikrogele ist in US 5 395 891 (BR-Mikrogele), US 6 127 488 (SBR-Mikrogele) und DE-A 19 701 487 (NBR-Mikrogele) beschrieben. Die in diesen Dokumenten beschriebenen Mikrogele sind nicht mit speziellen funktionellen Gruppen modifiziert.

Kautschukmikrogele, die spezielle funktionelle Gruppen enthalten, sind in US 6 184 296, DE-A 19 919 459 sowie in DE-A 10 038 488 beschrieben. In diesen Publikationen erfolgt die Herstellung der funktionalisierten Mikrogele in mehreren Verfahrensschritten. Im ersten Schritt wird der Basis-Kautschuklatex durch Emulsionspolymerisation hergestellt. Alternativ kann auch von kommerziell verfügbaren Kautschuklatices ausgegangen werden. Die Einstellung des gewünschten Vernetzungsgrads (charakterisiert durch Gelgehalt und Quellungsindex) erfolgt in einem nachgeschalteten Verfahrensschritt, vorzugsweise durch Vernetzung des Kautschuklatex mit einem organischen Peroxid. Die Durchführung der Vernetzungsreaktion mit Dicumylperoxid ist in DE-A 10 035 493 beschrieben. Die Funktionalisierüng wird im Anschluss an die Vernetzungsreaktion durchgeführt. In US 6 184 296 erfolgt eine Modifikation der vernetzten Kautschukpartikel durch Schwefel oder schwefelhaltige Verbindungen und in DE-A 19 919 459 sowie in DE-A 10 038 488 erfolgt eine Pfropfung der vernetzten Kautschuklatices mit funktionellen Monomeren wie Hydroxyethylmethacrylat und Hydroxybutylacrylat.

Die Herstellung der verwendeten Mikrogele kann auch in einem 1-Stufenverfahren, bei dem die Vernetzung und die Funktionalisierung schon während der Emulsionspolymerisation erfolgt, durchgeführt werden.

Die eingesetzten Kautschukpartikel besitzen vorzugsweise Teilchendurchmesser von 5 bis 1 000 nm, besonders bevorzugt 10 bis 600 nm (Durchmesserangaben nach DIN 53 206). Aufgrund ihrer Vernetzung sind sie unlöslich und in geeigneten Fällmitteln, z.B. Toluol, quellbar. Die Quellungsindizes der Kautschukpartikel (Qᵢ in Toluol betragen bevorzugt ca. 1 bis 15, vorzugsweise 1 bis 10. Der Quellungsindex wird aus dem Gewicht des lösungsmittelhaltigen Gels (nach Zentrifugation mit 20 000 Upm) und dem Gewicht des trockenen Gels berechnet, wobei Qᵢ = Nassgewicht des Gels/Trockengewicht des Gels bedeutet. Der Gelgehalt der Kautschukpartikel beträgt üblicherweise 80 bis 100 Gew.-%, bevorzugt 90 bis 100 Gew.-%.

Die eingesetzten Kautschukmikrogele bzw. deren Dispersionen sind in WO 2005/033186 und WO 2005/030843 sowie in der deutschen Patentanmeldung mit der Anmeldenummer 10 2004 062551.4 ausführlich beschrieben.

Als Komponente A1) kommen aromatische Diamine in Betracht, die zumindest in jeweils einer ortho-Stellung zu den Aminogruppen einen Alkylsubstituenten aufweisen und die ein Molekulargewicht von 122 bis 400 besitzen. Besonders bevorzugt sind solche aromatischen Diamine, die in ortho-Stellung zu der ersten Aminogruppe mindestens einen Alkylsubstituenten und in ortho-Stellung zu der zweiten Aminogruppe zwei Alkylsubstituenten mit jeweils 1 bis 4, vorzugsweise 1 bis 3 Kohlenstoffatomen aufweisen. Ganz besonders bevorzugt sind solche, die in jeweils mindestens einer ortho-Stellung zu den Aminogruppen einen Ethyl-, n-Propyl- und/oder iso-Propylsubstituenten und gegebenenfalls in weiteren ortho-Stellungen zu den Aminogruppen Methylsubstituenten aufweisen. Beispiele für derartige Diamine sind 2,4-Diaminomesitylen, 1,3,5-Triethyl-2,4-diaminobenzol sowie dessen technische Gemische mit 1-Methyl-3,5-diethyl-2,6-diaminobenzol oder 3,5,3',5'-Tetraisopropyl-4,4'-diaminodiphenylmethan. Selbstverständlich können die Gemische untereinander ebenfalls eingesetzt werden. Besonders bevorzugt handelt es sich bei der Komponente A1) um 1-Methyl-3,5-diethyl-2,4-diaminobenzol oder um dessen technische Gemische mit 1-Methyl-3,5-diethyl-2,6-diaminobenzol (DETDA).

Die Komponente A2) besteht aus mindestens einem aliphatischen Hydroxyl- und/oder primäre Aminogruppen aufweisenden Polyether- oder Polyesterpolyol der Molmasse 500 bis 18 000, bevorzugt 1000 bis 16 000, vorzugsweise 1500 bis 15 000. Die Komponente A2) besitzt die zuvor erwähnten Funktionalitäten. Die Polyetherpolyole können in an sich bekannter Art durch Alkoxylierung von Startermolekülen oder deren Gemischen entsprechender Funktionalität hergestellt werden, wobei zur Alkoxylierung insbesondere Propylenoxid und Ethylenoxid verwendet werden. Geeignete Starter bzw. Startergemische sind Succrose, Sorbit, Pentaerythrit, Gycerin, Trimethylenpropan, Propylenglykol sowie Wasser. Bevorzugt sind solche Polyetherpolyole, deren Hydroxygruppen zumindest zu 50 %, vorzugsweise mindestens zu 70 %, insbesondere ausschließlich aus primären Hydroxygruppen bestehen.

Als Polyesterpolyole kommen insbesondere solche in Betracht, die sich aufbauen aus den dafür bekannten Dicarbonsäuren, wie Adipinsäure, Phthalsäure, sowie den mehrwertigen Alkoholen, wie Ethylenglykol, 1,4-Butandiol und gegebenenfalls anteilig Glycerin und Trimethylolpropan.

Solche Polyether- und Polyesterpolyole sind beispielsweise beschrieben in Kunststoffhandbuch 7, Becker/Braun, Carl Hanser Verlag, 3. Auflage, 1993.

Weiterhin können als Komponente A2) primäre Aminogruppen aufweisende Polyether- und/oder Polyesterpolyole eingesetzt werden, wie sie beispielsweise beschrieben werden in EP-A 219 035 und als ATPE (Amino-terminierte Polyether) bekannt sind.

Insbesondere eignen sich als Aminogruppen aufweisende Polyether- und/oder Polyesterpolyole die sogenannten Jeffamine^{®} der Firma Texaco, die aufgebaut sind aus α,ω-Diaminopolypropylenglykolen.

Als Komponente A4) können die bekannten Katalysatoren für die Urethan- und Harnstoffreaktion eingesetzt werden, wie tertiäre Amine oder die Zinn(II)- oder Zinn(IV)-Salze höherer Carbonsäuren. Als weitere Zusatzstoffe kommen Stabilisatoren, wie die bekannten Polyethersiloxane oder Trennmittel, wie Zinkstearat, zum Einsatz. Die bekannten Katalysatoren oder Zusatzstoffe sind beispielsweise beschrieben in Kapitel 3.4 des Kunststoffhandbuchs J. Polyurethane, Carl Hanser Verlag (1993), S. 95 bis 119 und können in den üblichen Mengen eingesetzt werden.

Die sogenannte B-Komponente stellt ein NCO-Prepolymer auf Basis der Polyisocyanatkomponente B1) und der Polyolkomponente B2) dar und weist einen NCO-Gehalt von 8 bis 32 Gew.-%, vorzugsweise 12 bis 26 Gew.-%, besonders bevorzugt von 12 bis 25 Gew.-%, auf.

Bei den Polyisocyanaten B1) handelt es sich um gegebenenfalls durch chemische Modifizierung verflüssigte Polyisocyanate oder Polyisocyanatgemische der Diphenylmethanreihe. Der Begriff "Polyisocyanat der Diphenylmethanreihe" stellt den Oberbegriff für alle Polyisocyanate dar, wie sie bei der Phosgenierung von Anilin/ Formaldehyd-Kondensaten gebildet werden und in den Phosgenierungsprodukten als Einzelkomponenten vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, für die Gemische, die bei der destillativen Auftrennung derartiger Gemische als Destillat oder Destillationsrückstand anfallen und für beliebige Abmischungen von Polyisocyanaten der Diphenylmethanreihe.

Typische Beispiele für geeignete Polyisocyanate B1) sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate modifizierte Di- und/oder Polyisocyanate oder beliebige Gemische derartiger Polyisocyanate.

Als Komponente B2) geeignet sind insbesondere die dieser Definition entsprechenden Polyether- oder Polyesterpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 33 83 351, 33 04 273, 35 23 093, 31 10 695, DE-PS 11 52 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293 oder 25 50 796). Grundsätzlich sind als Komponente B2) Polyetherpolyole oder Polyesterpolyole der bereits oben unter A2) genannten Art geeignet, sofern sie den zuletzt genannten Kenndaten entsprechen.

Die Polyolkomponente B2) weist eine mittlere Molmasse von bevorzugt 1000 bis 16 000, insbesondere 2000 bis 16 000, bei einer mittleren Hydroxyfunktionalität von 3 bis 8, bevorzugt 3 bis 7 auf.

Zur Herstellung der NCO-Semiprepolymeren B) werden vorzugsweise die Komponenten B1) und B2) in solchen Mengenverhältnissen zur Reaktion gebracht (NCO-Überschuss), dass NCO-Semiprepolymere mit dem oben genannten NCO-Gehalt resultieren. Die diesbezügliche Umsetzung erfolgt im Allgemeinen innerhalb des Temperaturbereichs von 25 bis 100°C. Bei der Herstellung der NCO-Semiprepolymeren wird vorzugsweise die Gesamtmenge der Polyisocyanatkomponete B1) mit vorzugsweise der Gesamtmenge der zur Herstellung der NCO-Semiprepolymeren vorgesehenen Komponente B2) umgesetzt.

Die Herstellung der erfindungsgemäßen Elastomeren erfolgt nach der bekannten Reaktionsspritzgusstechnik (RSG-Verfahren, "RIM-process"), wie sie beispielsweise in DE-AS 2 622 951 (US 4 218 543) oder DE-OS 39 14 718 beschrieben ist. Die Mengenverhältnisse der Komponenten A) und B) entsprechen hierbei den stöchiometrischen Verhältnissen mit einer NCO-Kennzahl von 80 bis 120. Die Menge des in die Form eingebrachten Reaktionsgemischs wird im übrigen so bemessen, dass die Formkörper eine Dichte von mindestens 0,8, vorzugsweise 1,0 bis 1,4 g/cm³ aufweisen. Die Dichte der resultierenden Formkörper hängt selbstverständlich in starkem Maß von der Art und dem Gewichtsanteil der mitverwendeten Füllkörper ab. Im allgemeinen handelt es sich bei den erfindungsgemäßen Formkörpern um mikrozellulare Elastomere, d.h. um keine echten Schaumstoffe mit dem bloßen Auge sichtbarer Schaumstruktur. Dies bedeutet, dass gegebenenfalls mitverwendete organische Treibmittel weniger die Funktion eines echten Treibmittels als vielmehr die Funktion eines Fließmittels ausüben.

Die Ausgangstemperatur des in die Form eingebrachten Reaktionsgemischs aus den Komponenten A) und B) liegt im allgemeinen bei 20 bis 80, vorzugsweise 30 bis 70°C. Die Temperatur der Form liegt im allgemeinen bei 30 bis 130, vorzugsweise 40 bis 80°C. Bei dem zum Einsatz gelangenden Formwerkzeugen handelt es sich um solche der an sich bekannten Art, vorzugsweise aus Aluminium oder Stahl oder um metallgespritzte Epoxidwerkzeuge. Zur Verbesserung der Entformungseigenschaften können die Innenwände der verwendeten Form gegebenenfalls mit bekannten äußeren Formtrennmitteln beschichtet werden.

Die in der Form entstehenden Formkörper können im allgemeinen nach einer Formstandzeit von 5 bis 180 Sekunden entformt werden. Gegebenenfalls schließt sich an die Entformung ein Tempern bei einer Temperatur von ca. 60 bis 180°C während eines Zeitraums von 30 bis 120 Minuten an.

Die so hergestellten, vorzugsweise flächigen PU-Formkörper, eignen sich insbesondere zur Herstellung von flexiblen Automobilstoßstangen bzw. von flexiblen Karosserieelementen wie Türen und Heckklappen oder Kotflügeln von Automobilen.

Die Erfindung soll anhand der nachfolgenden Beispiele näher erläutert werden.

### Beispiele

Ausgangsmaterialien

### Semiprepolymer 1

91,8 Gew.-Teile 4,4'-Diisocyanatodiphenylmethan wurden bei 90°C mit 66,4 Gew.-Teilen des Polyetherpolyols 1 umgesetzt.

NCO-Gehalt nach 2 Stunden: 18,0 %

### Polyol 1

Polyetherpolyol der OH-Zahl 28, hergestellt durch Propoxylierung von Sorbit als hexafunktionellem Starter und anschließende Ethoxylierung im Verhältnis 83:17 mit überwiegend primären OH-Gruppen.

### DETDA

Mischung aus 80 Gew.-% 1-Methyl-3,5-diethyl-2,4-diaminobenzol und 20 Gew.-% 1-Methyl-3,5-diethyl-2,6-diaminobenzol

### Jeffamin D 400

aliphatisches Diamin der Fa. Texaco

### DABCO 33 LV

1,4-Diazabicyclo[2.2.2]octan (33 Gew.-% in Dipropylenglycol) der Fa. Air Products

### Tremin 939-955

Wollastonit der Fa. Quarzwerke Frechen

Die Verarbeitung der im folgenden beschriebenen Rezepturen erfolgte durch Reaktionsspritzgusstechnik. Die A- und die B-Komponente wurden in einem Hochdruckdosiergerät nach intensiver Vermischung in einem zwangsgesteuerten Mischkopf in ein geheiztes Plattenwerkzeug einer Formtemperatur von 80°C der Abmessungen 300 x 200 x 3 mm über einen Staubalkenanguss gedrückt.

Die Temperatur der A-Komponente betrug 60°C, die Temperatur der B-Komponente betrug 50°C.

Die mechanischen Werte wurden nach Tempern von 45 Minuten bei 160°C in einem Umlufltrockenschrank und anschließender Lagerung von 24 Stunden gemessen.

Vor jeder Serie wurde das Werkzeug mit dem Formtrennmittel RTWC 2006 der Fa. Chem Trend behandelt.

### Herstellung der modifzierten Kautschukgele ("Mikrogel A")

Für die Herstellung des Mikrogels wird auf die deutsche Patentanmeldung mit der Anmeldenummer 10 2004 062551.4 verwiesen, die am 24.12.2004 beim Deutschen Patent- und Markenamt eingereicht wurde (Anmelder: Rhein Chemie Rheinau GmbH); Mikrogel OBR 1320 D.

### Polyolformulierung 1:

| | |
|---|---|
| Polyol 1 | 52,4 Gew.-% |
| DETDA | 42,1 Gew.-% |
| Zn-Stearat | 2,0 Gew.-% |
| Jeffamin D400 | 3,0 Gew.-% |
| DABCO 33 LV | 0,3 Gew.-% |
| DBTDL | 0,2 Gew.-% |
| (Dibutylzinndilaurat) | |
| OH-Zahl | 289,2 |

### Herstellung der Kautschukgel-Dispersion:

Für die Herstellung der Kautschukgel-Dispersion wird auf die deutsche Anmeldung 10 2004 062551.4 verwiesen:

850 Gew.-Teile des Polyolformulierung 1 und 150 Gew.-Teile des Kautschukgels (Mikrogel A) wurden eingesetzt.

Es wurden dann 66,67 Gew.-Teile dieser Kautschukgeldispersion und 33,33 Gew.-Teile der Polyolformulierung 1 verrührt und dann mit 65,3 Gew.-Teilen Tremin 939-955 der Quarzwerke Frechen vermischt und mit 118,4 Gew.-Teilen des Prepolymers 1 unter den für die RIM-Technik üblichen Verarbeitungsbedingungen in eine auf 60°C geheizte Form der Größe 200 x 300 x 3 mm gespritzt (Index 105).

| | |
|---|---|
| Temperatur der Polyolformulierung: | 60°C |
| Temperatur des Prepolymers: | 50°C |
| Rohdichte des Polyurethanharnstoffelastomers: | 1250 kg/m³ |

Das Formteil wurde für 45 Min bei 160°C getempert. Nach Lagerung von 24 Stunden wurde die Platte gebogen, fixiert und dann auf die Biegenaht getreten.

Selbst nach mehreren Tritten konnte die Platte nicht gebrochen werden.

Eine Platte auf der Basis von 100 Gew.-Teilen der Polyolformulierung 1 mit 65,3 Gew.-Teilen Tremin 939-955 der Quarzwerke Frechen und 131,5 Gew.Teilen des Prepolymers 1 wurde unter den gleichen Bedingungen hergestellt und entsprechend behandelt. Der Index betrug auch hier 105. Nach einem Tritt ist die Platte an der Biegenaht bereits gebrochen.

Durch die Verwendung der Kautschukgele konnte die Zähigkeit des verstärkten Polyurethanharnstoffelastomers erheblich verbessert werden, wie das Ergebnis durch die Trittbelastung zeigt. Verbessert werden außerdem die Bruchdehnung sowie die Tieftemperatur-Zähigkeit nach DIN 53 435-DS bei -25°C (siehe Tabelle 2).

**Tabelle 1**

| Mechanische Eigenschaften | | |
|---|---|---|
| **Prüfgröße** | **Mikrogel-PUR-Harnstoffelastomer** | **PUR-Harnstoffelastomer (Vergleich)** |
| Biegemodul gemäß ASTM 790 | 1950 MPa | 1900 MPa |
| Bruchdehnung gemäß DIN 53 504 | 100 % | 60 % |
| Dynstat bei -25°C gemäß DIN 53 435-DS (Tieftemperatur-Zähigkeit) | 33 kJ/m² | 16 kJ/m² |

## Patentansprüche

1. Mit Verstärkungsstoffen ausgerüstete Formteile aus Polyurethanharnstoff-Elastomeren mit einem Harnstoffanteil von 70 bis 95 Mol-% und einem Urethananteil von 5 bis 30 Mol-%, jeweils bezogen auf Mol-% eines NCO-Äquivalents erhältlich durch Umsetzung eines Reaktionsgemisches aus einer
A-Komponente aus
A1) aromatischen Diaminen, die zumindest in jeweils einer ortho-Stellung zu den Aminogruppen einen Alkylsubstituenten aufweisen,
A2) einer aliphatischen Komponente bestehend aus mindestens einem Hydroxyl- und/oder primäre Aminogruppen aufweisenden Polyether- und/ oder Polyesterpolyol mit einem zahlenmittleren Molekulargewicht von 500 bis 18 000 und einer Funktionalität von 3 bis 8,
A3) einem Verstärkungsstoff und
A4) gegebenenfalls Katalysatoren und/oder gegebenenfalls Zusatzstoffen
sowie isocyanatgruppenhaltiges Prepolymer als B-Komponente aus der Reaktion von
B1) einer Polyisocyanatkomponente aus der Gruppe bestehend aus Polyisocyanaten und Polyisocyanatgemischen der Diphenylmethanreihe und verflüssigten Polyisocyanaten der Diphenylmethanreihe mit
B2) mindestens einer Polyolkomponente mit einem zahlenmittleren Molekulargewicht von 500 bis 18 000 und einer Funktionalität von 3 bis 8 aus der Gruppe bestehend aus gegebenenfalls organische Füllstoffe enthaltenden Polyetherpolyolen und gegebenenfalls organische Füllstoffe enthaltenden Polyesterpolyolen,
**dadurch gekennzeichnet, dass** die Komponente A und/oder Komponente B mit gegenüber Isocyanatgruppen reaktiven Gruppen modifizierte Kautschukgele C) auf Basis von vernetzten Kautschukpartikeln, die durch entsprechende Vernetzung von Kautschuken aus der Gruppe bestehend aus Polybutadien, Butadien/Acrylsäure-C₁-C₄-Alkylestercopolymere, Polyisopren, Styrol-Butadien-Copolymerisate mit Styrolgehalten von 1 bis 60, vorzugsweise 5 bis 50 Gew.-%, carboxylierte Styrol-Butadien-Copolymerisate, Fluorkautschuk, Acrylatkautschuk, Polybutadien-Acrylnitril-Copolymerisate mit Acrylnitrilgehalten von 5 bis 60, vorzugsweise 10 bis 50 Gew.-%, carboxylierte Nitrilkautschuke, Polychloropren, Isobutylen/Isopren-Copolymerisate mit Isoprengehalten von 0,5 bis 10 Gew.-%, bromierte Isobutylen/Isopren-Copolymerisate mit Bromgehalten von 0,1 bis 10 Gew.-%, chlorierte Isobutylen/Isopren-Copolymerisate mit Bromgehalten von 0,1 bis 10 Gew.-%, teil- und vollhydrierte Nitrilkautschuke, Ethylen-Propylen-Dien-Copolymerisate, Ethylen/Acrylatcopolymere, Ethylen/Vinylacetatcopolymere, Epichlorhydrinkautschuke erhalten werden, enthält.

2. Verwendung der Formteile gemäß Anspruch 1 als Karosserieaußenteile, wie z.B. flexible Automobilstoßstangen und Kotflügel und Karosserieelemente wie z.B. Türen und Heckklappen.

## Claims

1. Mouldings of polyurethane-urea elastomers containing reinforcing agents, having a urea content of 70 to 95 mol% and a urethane content of 5 to 30 mol%, based in each case on mol% of an NCO equivalent, said elastomers being obtainable by reacting a reaction mixture of
a component A consisting of
A1) aromatic diamines having an alkyl substituent in at least one ortho position to the amino groups,
A2) an aliphatic component consisting of at least one polyetherpolyol and/or polyesterpolyol of number-average molecular weight 500 to 18,000 and of functionality 3 to 8 having hydroxyl and/or primary amino groups,
A3) a reinforcing agent, and
A4) optionally catalysts and/or optionally additives,
and a component B which is a prepolymer containing isocyanate groups obtainable by reacting
B1) a polyisocyanate component from the group comprising polyisocyanates and polyisocyanate mixtures of the diphenylmethane series and liquefied polyisocyanates of the diphenylmethane series, with
B2) at least one polyol component of number-average molecular weight 500 to 18,000 and of functionality 3 to 8 from the group comprising polyetherpolyols optionally containing organic fillers and polyesterpolyols optionally containing organic fillers,
**characterized in that** component A and/or component B contain rubber gels C) modified by isocyanate-reactive groups, said rubber gels being based on crosslinked rubber particles obtained by the appropriate crosslinking of rubbers from the group comprising polybutadiene, butadiene/C₁-C₄-alkyl acrylate copolymers, polyisoprene, styrene/butadiene copolymers with styrene contents of 1 to 60, preferably of 5 to 50 wt.%, carboxylated styrene/ butadiene copolymers, fluorinated rubber, acrylate rubber, polybutadiene/ acrylonitrile copolymers with acrylonitrile contents of 5 to 60, preferably of 10 to 50 wt.%, carboxylated nitrile rubbers, polychloroprene, isobutylene/ isoprene copolymers with isoprene contents of 0.5 to 10 wt.%, brominated isobutylene/isoprene copolymers with bromine contents of 0.1 to 10 wt.%, chlorinated isobutylene/isoprene copolymers with chlorine contents of 0.1 to 10 wt.%, partially and fully hydrogenated nitrile rubbers, ethylene/propylene/ diene copolymers, ethylene/acrylate copolymers, ethylene/vinyl acetate copolymers and epichlorohydrin rubbers.

2. Use of the mouldings according to Claim 1 as external vehicle body parts, e.g. flexible car bumpers and wings, and body elements such as doors and rear flaps.

## Revendications

1. Pièces mises en forme en élastomères de type polyuréthaneurée, munies de substances de renfort, ayant une fraction d'urée de 70 à 95 mol% et une fraction d'uréthane de 5 à 30 mol%, dans chaque cas rapportées au pourcentage molaire d'un équivalent de NCO, pouvant être obtenues par réaction d'un mélange réactionnel constitué par un composant A de
A1) diamines aromatiques qui comportent au moins un substituant alkyle dans chaque cas en position ortho par rapport aux groupes amino,
A2) un composant aliphatique consistant en au moins un polyéther- et/ou polyesterpolyol comportant des groupes hydroxyle et/ou amino primaires ayant une masse moléculaire moyenne en nombre de 500 à 18 000 et une fonctionnalité de 3 à 8,
A3) une substance de renfort et
A4) éventuellement des catalyseurs et/ou éventuellement des additifs
et un prépolymère contenant des groupes isocyanate comme composant B issu de la réaction de
B1) un composant polyisocyanate du groupe consistant en les polyisocyanates et les mélanges de polyisocyanates de la série du diphénylméthane et les polyisocyanates liquéfiés de la série du diphénylméthane avec
B2) au moins un composant polyol ayant une masse moléculaire moyenne en nombre de 500 à 18 000 et une fonctionnalité de 3 à 8 du groupe consistant en les polyétherpolyols contenant éventuellement des charges organiques et les polyesterpolyols contenant éventuellement des charges organiques,
**caractérisées en ce que** le composant À et/ou le composant 8 contiennent des gels de caoutchouc modifiés avec des groupes réactifs avec les groupes isocyanates C) à base de particules de caoutchouc réticulé qui sont obtenues par réticulation correspondante de caoutchoucs du groupe consistant en le polybutadiène, les copolymères butadiéne/C₁-C₄- alkylesters d'acide acrylique, le polyisoprène, les copolymères styrène-butadiène ayant des teneurs en styrène de 1 à 60, de préférence de 5 à 50 % en masse, les copolymères styrène-butadiène carboxylés, le caoutchouc fluoré, le caoutchouc d'acrylate, les copolymères polybutadiène-acrylonitrile ayant des teneurs en acrylonitrile de 5 à 60, de préférence de 10 à 50 % en masse, les caoutchoucs nitrile carboxylés, le polychloroprène, les copolymères isobutylène/isoprène ayant des teneurs en isoprène de 0,5 à 10 % en masse, les copolymères isobutylène/ isoprène bromés ayant des teneurs en brome de 0,1 à 10 % en masse, les copolymères isobutylène/isoprène chlorés ayant des teneurs en brome de 0,1 à 10 % en masse, les caoutchoucs nitrile partiellement et totalement hydrogénés, les copolymères éthylène-propylène-diène, les copolymères éthylène/acrylate, les copolymères éthylène/acétate de vinyle, les catouchoucs d'épichtorhydrine.

2. Utilisation des pièces mises en forme selon la revendication 1 comme pièces extérieures de carrosseries, comme par exemple pare-chocs d'automobiles flexibles et ailes et éléments de carrosseries, comme par exemple portières et hayons.
